# EUROPEAN PATENT APPLICATION

(11) **EP 4 819 624 A1**
(43) Date of publication of application: **07.10.2026**
(21) Application number: 24896632.7
(22) Date of filing: 28.11.2024
(51) Int. Cl.: H04N 21/482

(54) **MULTIMEDIA CONTENT DISPLAYING METHOD AND APPARATUS, AND ELECTRONIC DEVICE AND STORAGE MEDIUM**

(30) Priority: 30.11.2023 CN 202311629265
(71) Applicant: Beijing Zitiao Network Technology Co., Ltd., Beijing 100190 (CN)
(72) Inventor: WANG, Yifan, Beijing 100028 (CN); HAO, Hele, Beijing 100028 (CN); GONG, Shuai, Beijing 100028 (CN); GENG, Xi, Beijing 100028 (CN)
(74) Representative: Grünecker Patent- und Rechtsanwälte PartG mbB
(86) International application number: PCT/CN2024/135154
(87) International publication number: WO 2025/113546

(57) **Abstract**

The present disclosure relates to the technical field of computers, and relates to a multimedia content displaying method and apparatus, and an electronic device and a storage medium. The method of the present disclosure comprises: in response to a preset trigger operation, playing in a playing interface current multimedia content in a multimedia content stream, displaying a selection area of the multimedia content stream, and displaying in the selection area an identifier of the multimedia content in the multimedia content stream, wherein the identifier of the multimedia content is arranged in the order in which the multimedia content appears in the multimedia content stream, and the multimedia content supports switching and playing in said order in response to a sliding operation in a preset direction in the playing interface; and in response to a selection operation for an identifier of target multimedia content in the selection area, playing the target multimedia content, wherein the multimedia content in the multimedia content stream comprises the target multimedia content.

## Description

### CROSS-REFERENCE TO RELATED APPLICATIONS

The present disclosure is based on and claims priority of Chinese application for invention No. 202311629265.3, filed on November 30, 2023, the disclosure of which is hereby incorporated into this disclosure by reference in its entirety.

### TECHNICAL FIELD

The present disclosure relates to the field of computer technologies, and in particular, to a display method and apparatus for multimedia content, an electronic device, and a storage medium.

### BACKGROUND

With the development of Internet technologies, users' requirements for the viewing experience of multimedia content, such as videos, are getting higher and higher.

Multimedia content is displayed in an immersive structure, which may more easily allow users to obtain an immersive experience. For example, users may continuously switch videos for viewing through a simple swiping operation.

### SUMMARY

The part of summary is provided so as to introduce the concept in a brief form, and these concepts will be described in detail in the following part of detailed description. The part of summary is not intended to identify the key features or necessary features of the claimed technical solution, nor is it intended to limit the scope of the claimed technical solution.

According to some embodiments of the present disclosure, a display method of multimedia content is provided, including: playing current multimedia content in a multimedia content stream in a playing interface, displaying a selection region of the multimedia content stream, and displaying identifications of multimedia content in the multimedia content stream in the selection region in response to a preset trigger operation, wherein the identifications of the multimedia content are arranged according to an order of the multimedia content in the multimedia content stream, and the multimedia content supports switching and playing according to the order in response to a swiping operation in a preset direction in the playing interface; and playing target multimedia content in response to a selection operation for an identification of the target multimedia content in the selection region, wherein the multimedia content in the multimedia content stream comprises the target multimedia content.

According to other embodiments of the present disclosure, a display apparatus of multimedia content is provided, including: a first display module configured to play current multimedia content in a multimedia content stream in a playing interface, display a selection region of the multimedia content stream, and display identifications of multimedia content in the multimedia content stream in the selection region in response to a preset trigger operation, wherein the identifications of the multimedia content are arranged according to an order of the multimedia content in the multimedia content stream, and the multimedia content supports switching and playing according to the order in response to a sliding operation in a preset direction in the playing interface; and a second display module configured to play target multimedia content in response to a selection operation for an identification of the target multimedia content in the selection region, wherein the multimedia content in the multimedia content stream comprises the target multimedia content.

According to yet other embodiments of the present disclosure, an electronic device is provided, including: a memory; and a processor coupled to the memory, and the processor is configured to execute the display method of multimedia content according to any one of the embodiments in the present disclosure based on instructions stored in the memory.

According to still other embodiments of the present disclosure, a computer-readable storage medium is provided, a computer program is stored on the computer-readable storage medium, and the display method of multimedia content according to any one of the embodiments in the present disclosure is executed when the program is executed by a processor.

According to yet other embodiments of the present disclosure, a computer program product is provided, including: instructions, and the display method of multimedia content according to any one of the embodiments in the present disclosure is implemented when the instructions are executed by a processor.

According to still other embodiments of the present disclosure, a computer program is provided, including: instructions, and the display method of multimedia content according to any one of the embodiments in the present disclosure is implemented when the instructions are executed by a processor.

Other features, aspects, and advantages of the present disclosure will become clear through the following detailed description of the exemplary embodiments of the present disclosure with reference to the drawings.

### BRIEF DESCRIPTION OF THE DRAWINGS

Preferred embodiments of the present disclosure are described hereinafter with reference to the drawings. The drawings described herein are used to provide a further understanding of the present disclosure, and the drawings, together with the following specific description, are included in this specification and form a part of this specification to explain the present disclosure. It should be understood that the drawings in the following description relate only to some embodiments of the present disclosure and do not constitute a limitation to the present disclosure. In the drawings:
Fig. 1 is a schematic flowchart of a display method of multimedia content according to some embodiments of the present disclosure;
Fig. 2 is a schematic diagram of a playing interface of multimedia content according to some embodiments of the present disclosure;
Fig. 3 is a schematic diagram of a playing interface of multimedia content according to other embodiments of the present disclosure;
Fig. 4 is a schematic flowchart of a display method of multimedia content according to other embodiments of the present disclosure;
Fig. 5 is a schematic diagram of a playing interface of multimedia content according to yet other embodiments of the present disclosure;
Fig. 6 is a schematic structural diagram of a display apparatus of multimedia content according to some embodiments of the present disclosure;
Fig. 7 is a schematic structural diagram of an electronic device according to some embodiments of the present disclosure;
Fig. 8 is a schematic structural diagram of a computer system according to some embodiments of the present disclosure.

It should be understood that, for ease of description, the dimensions of the various parts shown in the drawings are not necessarily drawn to a real scale. Throughout the drawings, the same or similar reference numerals are used to refer to the same or similar components. Therefore, once an item is defined in one drawing, it may not be discussed further in subsequent drawings.

### DETAILED DESCRIPTION

The technical solutions in the embodiments of the present disclosure are described clearly and completely hereinafter with reference to the drawings in the embodiments of the present disclosure, but apparently, the described embodiments are merely some rather than all of the embodiments of the present disclosure. The following description of the embodiments is actually illustrative only, and is not to be construed as any limitation to the present disclosure and its application or use. It should be understood that the present disclosure may be implemented in various forms and should not be construed as limited to the embodiments set forth herein.

The technical solutions in the embodiments of the present disclosure are described clearly and completely hereinafter with reference to the drawings in the embodiments of the present disclosure, but apparently, the described embodiments are merely some rather than all of the embodiments of the present disclosure. The following description of the embodiments is actually illustrative only, and is not to be construed as any limitation to the present disclosure and its application or use. It should be understood that the present disclosure may be implemented in various forms and should not be construed as limited to the embodiments set forth herein.

It should be understood that steps described in method implementations of the present disclosure may be performed in different orders and/or in parallel. In addition, the method implementations may include additional steps and/or omit performing the illustrated steps. The scope of the present disclosure is not limited in this respect. Unless otherwise specifically stated, relative arrangements, numerical expressions, and values of components and steps set forth in these embodiments are to be construed as merely exemplary and do not limit the scope of the present disclosure.

The term "include/comprise" and its variant used in the present disclosure mean an open term that at least includes the following element/feature, but does not exclude other elements/features, that is, "include/comprise but not limited to". In addition, the term "contain" and its variant used in the present disclosure mean an open term that at least contains the following element/feature, but does not exclude other elements/features, that is, "contain but not limited to". Therefore, "include/comprise" is synonymous with "contain". The term "based on" means "at least partially based on".

References to "an embodiment", "some embodiments", or "the embodiments" throughout the specification mean that specific features, structures, or characteristics described in conjunction with the embodiments are included in at least one embodiment of the present disclosure. For example, the term "an embodiment" means "at least one embodiment"; the term "another embodiment" means "at least one other embodiment"; and the term "some embodiments" means "at least some embodiments". Moreover, appearances of the phrase "in an embodiment", "in some embodiments", or "in the embodiments" in various places throughout the specification are not necessarily all referring to the same embodiment, but may also refer to the same embodiment.

It should be noted that concepts such as "first" and "second" mentioned in the present disclosure are merely used to distinguish between different apparatuses, modules, or units, and are not used to limit an order or interdependence of functions performed by these apparatuses, modules, or units. Unless otherwise specified, concepts such as "first" and "second" are not intended to imply that objects so described must be in a given order temporally, spatially, in ranking, or in any other way.

It should be noted that modifiers of "a" and "a plurality of" mentioned in the present disclosure are illustrative rather than restrictive, and those skilled in the art should understand that "a" or "a plurality of" should be understood as "one or more" unless otherwise clearly indicated in the context.

Names of messages or information exchanged between a plurality of apparatuses in the implementations of the present disclosure are used for illustrative purposes only, and are not used to limit the scope of these messages or information.

Embodiments of the present disclosure are described in detail hereinafter with reference to the drawings, but the present disclosure is not limited to these specific embodiments. The following specific embodiments may be combined with each other, and the same or similar concepts or processes may not be described in detail in some embodiments. In addition, in one or more embodiments, specific features, structures, or characteristics may be combined in any suitable manner that will be clear to those of ordinary skill in the art from this disclosure.

The inventors have found that an immersive display structure may improve the switching efficiency of multimedia content, allowing users to more easily obtain an immersive experience. However, because the immersive display structure prevents users from knowing subsequent multimedia content to be displayed in advance, users cannot actively screen the subsequent multimedia content to be displayed. In particular, in a case where the multimedia content is long in duration, the users may need to watch for a relatively long time to determine whether the content is of interest. With the immersive structure, it is difficult for the users to quickly screen content they want to watch.

The present disclosure provides a display method and apparatus for multimedia content, an electronic device, and a storage medium to improve the switching and display efficiency of multimedia content, facilitating quick and accurate screening of multimedia content.

The display method of multimedia content of the present disclosure may be performed by the display apparatus of multimedia content, and the display apparatus may be provided in a client and implemented in the form of hardware and/or software. In a case where the display apparatus is implemented in the form of software, the display apparatus may be provided in an application (APP). All the display-related steps in the present disclosure may be implemented through a graphical user interface (Graphical User Interface, GUI).

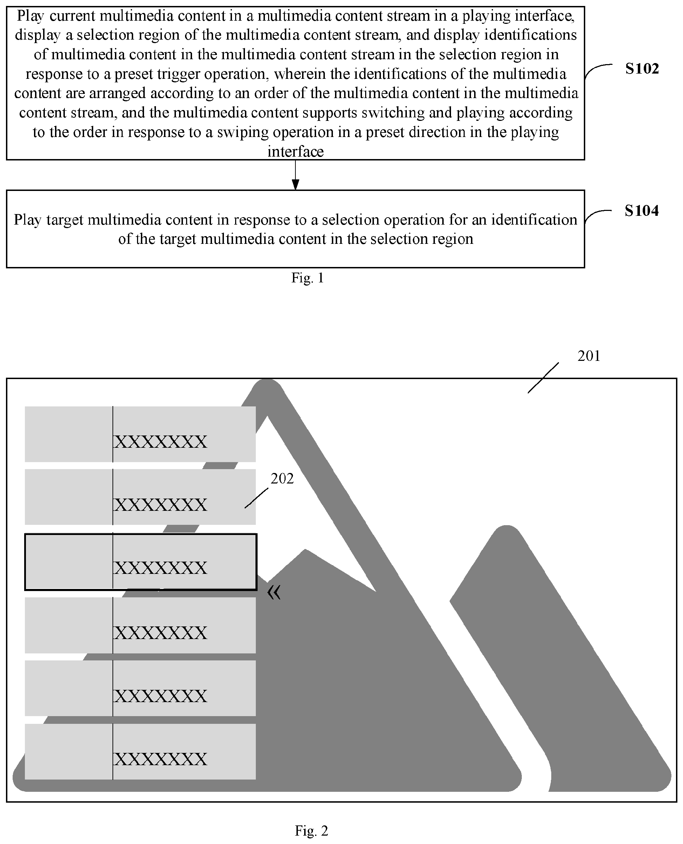

Some embodiments of the display method of multimedia content of the present disclosure are described hereinafter with reference to FIGS. 1 to 5.

Fig. 1 is a flowchart of some embodiments of a display method of multimedia content of the present disclosure. As shown in Fig. 1, the method in these embodiments includes steps S102 and S104.

In step S102, current multimedia content in a multimedia content stream is played in a playing interface, a selection region of the multimedia content stream is displayed, and identifications of multimedia content in the multimedia content stream are displayed in the selection region in response to a preset trigger operation, and the identifications of the multimedia content are arranged according to an order of the multimedia content in the multimedia content stream, and the multimedia content supports switching and playing according to the order in response to a swipe operation in a preset direction in the playing interface.

For example, the preset trigger operation includes an operation of starting an application, a trigger operation for a control of the selection region, a trigger on an entry of a multimedia content channel, an update operation for the multimedia content channel, or a trigger operation for the current multimedia content, which is not limited to the above examples. In response to the preset trigger operation, the selection region of the multimedia content stream is displayed while the current multimedia content in the multimedia content stream is played in the playing interface.

The current multimedia content may be played in the playing interface in a full screen manner or displayed in the playing interface according to a size of the current multimedia content.

The multimedia content stream is, for example, an immersive information stream (or Feed stream) and includes one or more pieces of multimedia content. The multimedia content in the multimedia content stream may be switched and played in a single column on a screen, that is, the multimedia content stream may be an immersive single-column information stream.

The multimedia content stream may be a multimedia content stream recommended to a current user, and the current user is a user who is currently watching. The multimedia content stream may be determined based on a preset recommendation strategy. For example, an AI (Artificial Intelligence) model may be used to determine the multimedia content stream recommended to the current user according to at least one of a type of multimedia content that is of interest to the current user and that is preconfigured by the current user, historical operation behavior information, or information about a followed user. For example, the historical operation behavior information includes related information about at least one of the current user's watching, liking, commenting, sharing, following, or collecting behavior. The related information about at least one of the current user's watching, liking, commenting, sharing, following, or collecting behavior may include a type and/or a publishing user of multimedia content corresponding to the related information, or the like. For the watching behavior, the related information may further include information such as a watching duration. Identifications of multimedia content included in the multimedia content stream recommended to the current user may be stored in a database in a table after being determined, and these identifications of the multimedia content are obtained from the database when the current user starts playing the multimedia content.

For example, the selection region is displayed on an upper layer of the playing interface or in a floating layer above the playing interface, which does not affect the playing of the current multimedia content. The identifications of the multimedia content arranged according to the order of the multimedia content in the multimedia content stream are displayed in the selection region. The multimedia content in the multimedia content stream supports switching and playing according to the arrangement order of the identifications of the multimedia content in response to the swipe operation in the preset direction in the playing interface. That is, the arrangement order of the identifications of the multimedia content in the selection region is the same as the order in which the multimedia content is switched and played in response to the swipe operation in the playing interface. For the multimedia content other than the current multimedia content, the user may switch to the multimedia content in two manners, that is, the swipe operation or the selection operation in the selection region.

The swipe operation in the preset direction may be determined according to a display direction of a screen. For example, for vertical screen display, the swipe operation in the preset direction may be an upward swipe operation, and for horizontal screen display, the swipe operation in the preset direction may be a leftward swipe operation. For example, in response to the swipe operation in the preset direction, a playing page of the current multimedia content is swiped out of a screen region, and a playing page of next multimedia content of the current multimedia content in the multimedia content stream is swiped into the screen region, thereby implementing an immersive display manner.

In some embodiments, in response to a change in the display direction of the screen, display sizes of the current multimedia content and the selection region are adjusted according to a size of a playing region and a parameter of the current multimedia content. Operations such as the rotation of the screen may cause a change in display size, but do not affect displayed content.

In some embodiments, the multimedia content includes a combination of one or more of text, image, video, and audio. For example, the multimedia content is a video, a picture and text information, a collection, or the like. In some embodiments, the identifications of the multimedia content include at least one of thumbnails or names (titles) corresponding to the multimedia content.

In step S104, target multimedia content is played in response to a selection operation for an identification of the target multimedia content in the selection region.

The multimedia content in the multimedia content stream includes the target multimedia content. The current user may select any identification of the multimedia content in the selection region as the identification of the target multimedia content. The current user may select the identification of the target multimedia content in a plurality of manners, for example, by clicking or voice, which will not be described in detail herein.

The target multimedia content is played in response to the selection operation for the identification of the target multimedia content. If no swipe operation in the preset direction or selection operation in the selection region is received when the playing of the target multimedia content ends, the target multimedia content may be loop-played. Similarly, the current multimedia content may also be loop-played.

In the method in the above embodiments, the selection region of the multimedia content stream is further displayed while the current multimedia content in the multimedia content stream recommended to the current user is played, and the identifications of the multimedia content in the multimedia content stream are displayed in the selection region. The arrangement order of the identifications of the multimedia content is the same as the order in which the multimedia content supports switching and playing in response to the swipe operation in the preset direction in the playing interface. The target multimedia content may be directly played in response to the selection operation for the identification of the target multimedia content in the selection region. In the method in the above embodiments, the selection region is added on the basis of the immersive display of the multimedia content, so that the current user may more intuitively see subsequent multimedia content to be displayed, and the current user may switch the multimedia content in two manners. Through the selection region, the current user may more quickly and accurately screen multimedia content he/she wants to watch, thereby improving the efficiency of multimedia content switching and display, and implementing quick and accurate screening of the multimedia content.

In some embodiments, in a case where the selection region includes identifications of a plurality of pieces of multimedia content, the identifications of the plurality of pieces of multimedia content are displayed in a list. The identifications of the plurality of pieces of multimedia content may be displayed in a same layer (or floating layer).

The selection region may display only identifications of multimedia content after the current multimedia content, or may also display an identification of the current multimedia content and/or identifications of multimedia content before the current multimedia content. The number of identifications of multimedia content displayed in the selection region may be determined according to a size of a screen, a size of the selection region, and a size of a region of the identifications of the multimedia content.

In some embodiments, an area of the selection region is smaller than that of the playing interface, so that the playing of the multimedia content is not completely occluded. For example, one side of the selection region (or floating layer) coincides with one side of the playing interface. For example, the selection region (or floating layer) may slide out from one side of the playing interface for display. The selection region may be displayed with a first preset transparency, but is not limited to the above example.

In some embodiments, in the selection region, the identification of the current multimedia content is displayed with a first effect, and the identifications of the multimedia content other than the current multimedia content are displayed with a second effect. The identification of the current multimedia content (that is, the multimedia content being played) and the identifications of the multimedia content other than the current multimedia content are displayed with different effects, so that a user may more intuitively and accurately determine a position of the current multimedia content, thereby distinguishing the multimedia content before and after the current multimedia content, and improving the efficiency of selection, thereby improving the efficiency of multimedia content switching and display. For example, the identification of the current multimedia content and the identifications of the other multimedia content may be displayed with different colors or different effect effects, or the identification of the current multimedia content is highlighted by adding a frame or highlighting, or prompt information of "playing" is added to the identification of the current multimedia content, which is not limited to the above examples. For example, a mask is added to the identification of the current multimedia content, and the prompt information of "playing" is displayed in the mask. The mask may be displayed with a second preset transparency.

In some embodiments, for the multimedia content that has been played in the multimedia content stream, a playing progress of the multimedia content that has been played is correspondingly displayed at an identification of the multimedia content that has been played in the selection region; or for each piece of multimedia content in the multimedia content stream, a playing progress of the multimedia content is correspondingly displayed at an identification of the multimedia content in the selection region.

The playing progress may be displayed only for the multimedia content that has been played (which may include the multimedia content being played), or the playing progress may be displayed for each piece of multimedia content. For the multimedia content that has not been played, information such as a progress of 0 or "not played" may be displayed. By displaying the playing progress, the current user may more intuitively determine which multimedia content has been watched and which multimedia content has not been watched, and determine the playing progress, thereby improving the efficiency of selection, and improving the efficiency of multimedia content switching and display.

In some embodiments, description information of each piece of multimedia content is displayed at an identification of the each piece of multimedia content in the selection region, and the description information includes at least one of an introduction, an identification of a publishing user, a duration, a playing progress, a number of viewings, a number of likes, a number of collections, a number of comments, the number of forwardings, or following information of the current user about a publishing user. The identification of the publishing user includes, for example, at least one of an avatar or a name of the publishing user. Through the description information, the current user may more quickly and accurately determine the multimedia content of interest, thereby improving the efficiency of selection, and improving the efficiency of multimedia content switching and display.

As shown in Fig. 2, identification regions 202 of a plurality of pieces of multimedia content are displayed in a list in an upper layer (or floating layer) of a playing interface 201, and are used for displaying identifications of the multimedia content. The selection region (or floating layer) occupies a left portion of the playing interface. The identification region 202 of each piece of multimedia content may include two sub-regions, which may be respectively used for displaying a thumbnail and a name (title) of the multimedia content. Each identification region 202 may further include description information of multimedia content. For example, the description information includes at least one of an introduction, an identification of a publishing user, a duration, a playing progress, a number of viewings, a number of likes, a number of collections, a number of comments, a number of forwardings, or following information of the current user about a publishing user.

As shown in Fig. 2, the identification region of the multimedia content being played may be highlighted by adding a frame.

In some embodiments, the selection region includes identifications of some multimedia content in the multimedia content stream, and identifications of multimedia content after the some multimedia content are displayed in the selection region according to the order of the multimedia content in the multimedia content stream in response to a first switching operation of the current user for the identifications of the some multimedia content in the selection region; and/or identifications of multimedia content before the some multimedia content are displayed in the selection region according to the order of the multimedia content in the multimedia content stream in response to a second switching operation of the current user for the identifications of the some multimedia content in the selection region.

Based on the size of the selection region, the selection region may display only the identifications of the some multimedia content in the multimedia content stream, and the current user may switch the identifications of the some multimedia content to identifications of another part of multimedia content. For example, the first switching operation is an upward swipe operation in the selection region, and the second switching operation is a downward swipe operation in the selection region. For another example, the first switching operation is a trigger operation for a first switching control, and the second switching operation is a trigger operation for a second switching control. The first switching operation and the second switching operation may be flexibly configured and are not limited to the above examples.

In some embodiments, in a case where the identifications of the multimedia content in the selection region support swiping switching, a switching control is displayed in response to the identifications being swiped to a bottommost or topmost position, and identifications of switched multimedia content are displayed in response to a trigger operation for the switching control. The identifications of the switched multimedia content continue to support the swiping switching.

In some embodiments, the display method of multimedia content further includes: displaying user identifications of one or more recommended users; and displaying a page of a target recommended user in response to a selection operation for a user identification of the target recommended user, and the one or more recommended users include the target recommended user. The user identifications of the one or more recommended users may be displayed in the selection region or in a display region of recommended users in a floating layer, and the selection region and the display region of recommended users are different regions.

The one or more recommended users may be determined based on behavior of the current user or behavior of all users. In some embodiments, each of the one or more recommended users satisfies at least one of the following: the number of times of access of the current user to multimedia content published by the recommended user exceeds a first threshold; or the number of times of access to multimedia content published by the recommended user exceeds a second threshold.

Access may include specific behavior such as viewing, commenting, liking, following, collecting, and sharing, which is not limited to the above examples. The recommended users may include users that are often watched by the current user and/or popular creators.

For example, the user identification includes at least one of a user name, a user avatar, or user-related description information. The user-related description information includes, for example, at least one of a number of users following the user, a number of likes of multimedia content of the user, a number of viewings of the multimedia content of the user, a number of comments on the multimedia content of the user, a number of collections of the multimedia content of the user, or a number of sharings of the multimedia content of the user.

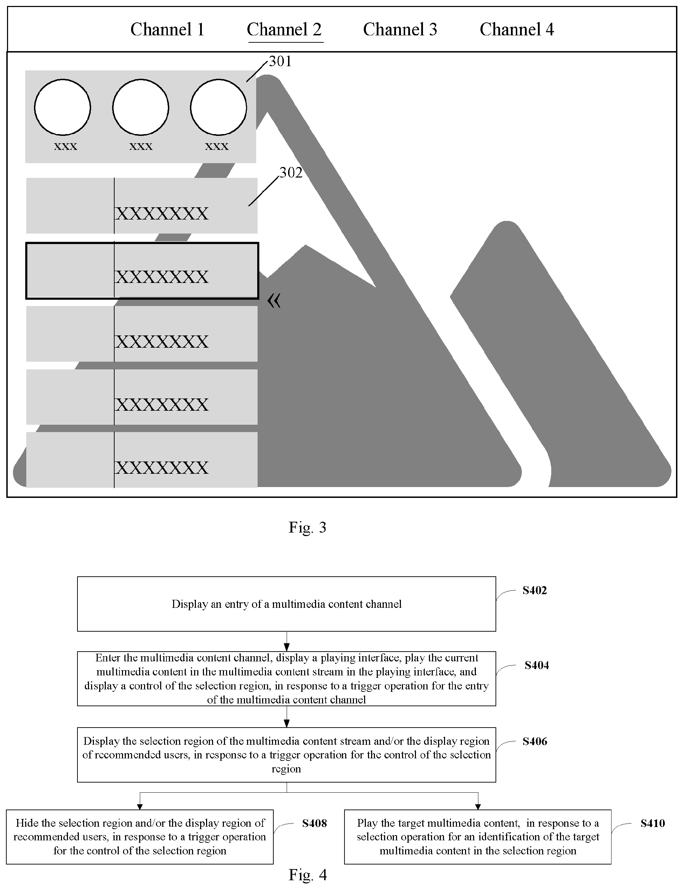

As shown in Fig. 3, a display region 301 of recommended users and a selection region 302 may be displayed in an upper layer (or floating layer) of the playing interface. The display region 301 of recommended users may be located above the selection region 302, which is more convenient for the current user to view and select, but is not limited to the above example. The display region 301 of recommended users may be fixedly displayed.

In some embodiments, an identification of a switched recommended user is displayed in response to a third switching operation for an identification of a recommended user in the display region of recommended users. For example, the third switching operation is a swipe operation in the display region of recommended users or a trigger operation for a third switching control, which is not limited to the above example.

The page of the target recommended user may include related information about multimedia content published by the target recommended user, and the playing interface is displayed and the selected multimedia content is played in response to a selection operation of the current user for the multimedia content published by the target recommended user.

In some embodiments, a re-generated selection region is displayed when the selected multimedia content is played. The re-generated selection region may be obtained by inserting an identification of the selected multimedia content between identifications of respective pieces of multimedia content in an original selection region. For example, the identification of the selected multimedia content is inserted after an identification of a previously played piece of multimedia content. A re-generated multimedia content stream may also be used, and the re-generated selection region includes identifications of multimedia content in the re-generated multimedia content stream. The re-generated multimedia content stream may be composed of multimedia content associated with the selected multimedia content. The re-generated multimedia content stream may be generated based on a different recommendation strategy from the original multimedia content stream.

While the re-generated selection region is displayed, a re-generated display region of recommended users may also be displayed. The target recommended user may no longer be displayed in the display region of recommended users, and a new recommended user is displayed. An entry to a page of a publishing user of the multimedia content may be displayed at another position in the playing interface, and the current user may re-enter the page of the target recommended user through the entrance.

The method in the above embodiments provides information in two dimensions of recommended users and multimedia content for the current user to select, and the current user may quickly find content of interest in different manners, thereby further improving the efficiency of multimedia content switching and display.

In some embodiments, a playing interface is displayed in response to an application being opened, the current multimedia content in the multimedia content stream is played in the playing interface, and the selection region of the multimedia content stream is displayed; or a playing interface is displayed in a multimedia content channel in response to a trigger operation for an entry of the multimedia content channel, the current multimedia content in the multimedia content stream is played in the playing interface, and the selection region of the multimedia content stream is displayed; or a playing interface is displayed in a multimedia content channel in response to an update operation for the multimedia content channel, the current multimedia content in the multimedia content stream is played in the playing interface, and the selection region of the multimedia content stream is displayed; or in response to a swiping operation in a playing interface, a playing page of a previous piece of multimedia content is switched to a playing page of the current multimedia content, the current multimedia content in the multimedia content stream is played in the playing interface, and the selection region of the multimedia content stream is displayed. There may be a plurality of manners of triggering to simultaneously display the selection region and play the current multimedia content, that is, there may be a plurality of preset trigger operations, and all of them may be based on the immersive display manner with the addition of the display of the selection region. Certainly, the identifications of the one or more recommended users may also be displayed, which will not be described in detail herein.

In some embodiments, the multimedia content channel includes a plurality of channels, different channels have different durations of multimedia content streams or different generation strategies, and different channels have different playing manners of multimedia content. For example, the multimedia content channel includes a first channel and a second channel, a multimedia content stream in the first channel is a first multimedia content stream, and multimedia content in the first multimedia content stream has a duration greater than a preset duration. A multimedia content stream in the second channel is a second multimedia content stream, and multimedia content in the second multimedia content stream has a duration less than or equal to the preset duration. In the first channel, a selection region of the first multimedia content stream is displayed when the multimedia content in the first multimedia content stream is played in the playing interface, and in the second channel, no selection region is displayed when the multimedia content in the first multimedia content stream is played in the playing interface.

As shown in Fig. 3, a plurality of channels may be set, and channel 2 may display the selection region while playing the multimedia content. The plurality of channels are divided not only according to the length of the multimedia content, but also according to other different dimensions. For example, a channel of a user followed by the current user, a live channel, or the like.

A plurality of multimedia content channels are divided, the selection region is displayed while long-duration multimedia content is played, and no selection region is displayed for short-duration multimedia content. This may adapt to the characteristics of different multimedia content, and provide users with a better immersive experience.

In some embodiments, an entry of a multimedia content channel is displayed; and in response to a trigger operation for the entry of the multimedia content channel, the multimedia content channel is entered and the playing interface is displayed, and the selection region is in a hidden state.

The selection region is displayed in response to an operation of the current user for evoking the selection region (or floating layer). Similarly, the display region of recommended users may also be in the hidden state, and the display region of recommended users is displayed in response to an operation for evoking the display region of recommended users (or floating layer). The selection region and the display region of recommended users may be located in the same floating layer (or layer).

The selection region, the display region of recommended users, or the floating layer is hidden when the current multimedia content starts to be played, so that the current user may obtain a better immersive experience. The current user may evoke a corresponding region by triggering a control of the selection region, a control of the display region of recommended users, or a control of the floating layer, or may do so in manners such as voice, which is not limited to the above examples. Both the selection region and the display region of recommended users may be evoked by one control. For example, the selection region and the display region of recommended users are simultaneously evoked by the control of the selection region (or the control of the floating layer).

Another embodiment of the display method of multimedia content of the present disclosure is described below with reference to Fig. 4.

Fig. 4 is a flowchart of some embodiments of a display method of multimedia content of the present disclosure. As shown in Fig. 4, the method in these embodiments includes steps S402 to S410.

In step S402, an entry of a multimedia content channel is displayed.

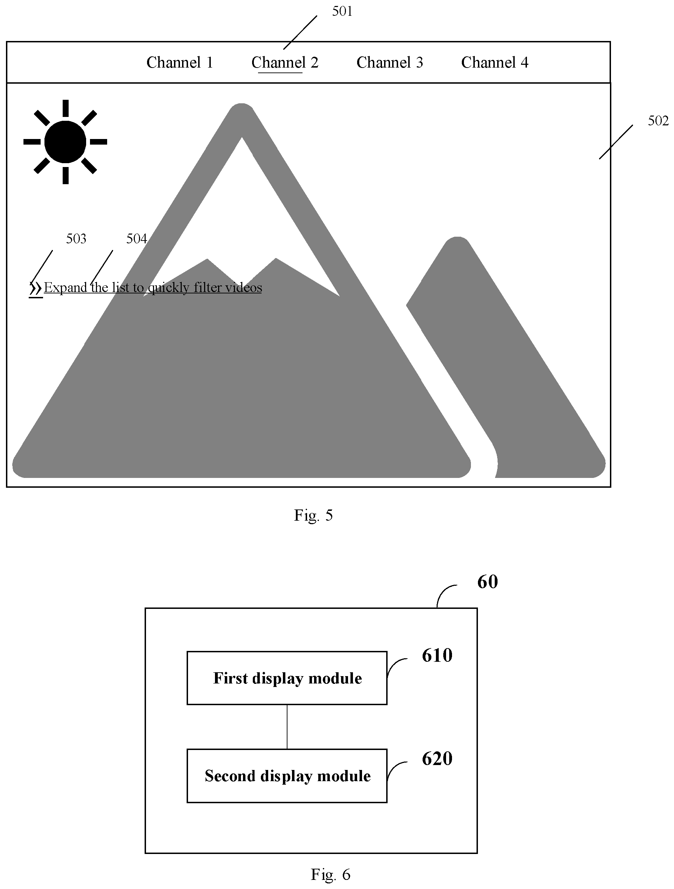

As shown in Fig. 5, entry controls of a plurality of channels may be displayed, and channel 2 may represent the entry of the multimedia content channel.

In step S404, in response to a trigger operation for the entry of the multimedia content channel, the multimedia content channel is entered and a playing interface is displayed, the current multimedia content in the multimedia content stream is played in the playing interface, and a control of the selection region is displayed, and the selection region and/or the display region of recommended users are in a hidden state.

For contents included in the selection region and the display region of recommended users, reference may be made to the above embodiments, and details are not described herein again. In a case where the selection region and/or the display region of recommended users are displayed in a floating layer, the control of the selection region and a control of the floating layer may be the same control.

As shown in Fig. 5, the current user may trigger the entry control corresponding to channel 2.

In some embodiments, in a case where the selection region is in the hidden state, only a first region is displayed and the control of the selection region is displayed in the first region.

The display region of recommended users may also be displayed in the first region, and the display region of recommended users may also be in the hidden state. Alternatively, a third region is further included in the display interface, the display region of recommended users may be displayed in the third region, and the first region and the third region are displayed, that is, the display region of recommended users is in a displayed state. The first region and the third region may be located in a same floating layer (or layer).

In some embodiments, after the multimedia content channel is entered and before the control of the selection region is triggered for the first time, prompt information is displayed at the control of the selection region. The prompt information may be used to prompt the current user to trigger the control of the selection region to display the selection region and/or the display region of recommended users. The control of the selection region and the control of the display region of recommended users may be different controls, which may respectively trigger the display of the selection region and the display of the display region of recommended users, or the same control of the selection region (or floating layer) may be used to simultaneously trigger the display of the selection region and the display of the display region of recommended users.

As shown in Fig. 5, after channel 2 is entered, the current multimedia content may be directly played in the playing interface 502 without the need for the current user to trigger the playing of the current multimedia content, and the selection region is in the hidden state and does not occlude the content being played, so that the current user may obtain a better immersive experience. The prompt information 503 may be displayed next to the control 503 of the selection region (or floating layer). The control 503 of the selection region (or floating layer) may also indicate a display direction in a form of graphics or the like.

In step S406, the selection region of the multimedia content stream and/or the display region of recommended users are displayed in response to a trigger operation for the control of the selection region.

The current user may trigger the selection region and/or the display region of recommended users to be completely displayed by clicking the control of the selection region (or floating layer) or dragging the selection region (or floating layer) along the display direction. It should be noted that the display region of recommended users may also be displayed by triggering a different control from the control of the selection region.

In some embodiments, the current multimedia content in the multimedia content stream is played in the playing interface, a first region and a second region are simultaneously displayed, and the selection region is displayed in the second region. The display region of recommended users may also be displayed in the second region.

As shown in Fig. 2 or Fig. 3, the display region of recommended users may also be displayed while the selection region is displayed. The graphic of the control of the selection region (or floating layer) may change to indicate a direction of hiding the selection region and/or the display region of recommended users.

In step S408, the selection region and/or the display region of recommended users are hidden in response to a trigger operation for the control of the selection region.

In some embodiments, in a case where the first region and the second region are simultaneously displayed, the second region is hidden and only the first region is displayed in response to the trigger operation for the control of the selection region. The current user may trigger the control of the selection region (or floating layer) to hide the selection region and/or the display region of recommended users again. For example, the current user may click the control of the selection region (or floating layer) or drag the control of the selection region (or floating layer) along the hiding direction.

The selection region and/or the display region of recommended users may also be hidden in other manners. In some embodiments, the selection region is hidden in response to the selection region being displayed for a preset duration, or in response to a preset operation for the playing interface. Similarly, the display region of recommended users is hidden in response to the display region of recommended users being displayed for the preset duration, or in response to the preset operation for the playing interface.

For example, if the selection region is displayed for the preset duration but the current user does not perform a corresponding operation in the selection region, the selection region and/or the display region of recommended users may be automatically hidden, so that the current user may better watch the current multimedia content. For another example, the current user may perform the preset operation such as clicking in the playing interface to hide the selection region and/or the display region of recommended users.

In some embodiments, after the selection region and/or the display region of recommended users are hidden for the first time, the prompt information may be displayed at the control of the selection region (or floating layer). Certainly, if the display region of recommended users corresponds to an independent control, the prompt information may also be displayed at the control of the display region of recommended users.

In step S410, the target multimedia content is played in response to a selection operation for an identification of the target multimedia content in the selection region.

In some embodiments, the target multimedia content is played and the selection region is hidden; or the target multimedia content is played, the identification of the target multimedia content in the selection region is switched from a first display effect to a second display effect, and the identification of the current multimedia content is switched from the second display effect to the first display effect, and identifications of multimedia content other than the target multimedia content and the current multimedia content in the selection region are displayed with the first display effect.

When the current multimedia content is switched to the target multimedia content for playing, the selection region and/or the display region of recommended users may be hidden, and then the selection region and/or the display region of recommended users are evoked based on the manners in the above embodiments. Alternatively, when the current multimedia content is switched to the target multimedia content for playing, the selection region may be displayed, but the display effects of the identification of the current multimedia content and the identification of the target multimedia content in the selection region are switched. For specific display effects, reference may be made to the above embodiments, and details are not described herein again.

In some embodiments, in a case where the target multimedia content is multimedia content that has been played but has not been completely played, the target multimedia content is played from an unplayed moment according to a playing progress of the target multimedia content.

In some embodiments, in response to an update operation for the multimedia content channel, the multimedia content stream is updated. For the display manner of the updated multimedia content stream and the display manner of the selection region and/or the display region of recommended users, reference may be made to the above embodiments, and details are not described herein again.

In some embodiments, the multimedia content in the multimedia content stream includes a collection, the collection is a collection of a plurality of pieces of multimedia content of a same theme, and an identification of the collection includes the theme of the collection. The identification of the collection may further include an image, description information, or the like corresponding to the collection. The description information corresponding to the collection includes at least one of an identification of a publishing user, duration, a playing progress, a number of viewings, a number of likes, a number of collections, a number of comments, a number of forwardings, or following information of the current user about a publishing user.

In some embodiments, playing the target multimedia content in response to the selection operation for the identification of the target multimedia content in the selection region includes: playing the plurality of pieces of multimedia content in the collection according to an order of the plurality of pieces of multimedia content in the collection in response to a selection operation for the identification of the collection in the selection region; or displaying a detail interface of the collection in response to the selection operation for the identification of the collection in the selection region, wherein the detail interface of the collection comprises identifications of the plurality of pieces of multimedia content in the collection, and in response to a selection operation for an identification of any piece of multimedia content in the collection, multimedia content corresponding to the selected identification is played.

For example, in a case where the plurality of pieces of multimedia content in the collection are played according to the order of the plurality of pieces of multimedia content in the collection, identifications of the plurality of pieces of multimedia content in the collection may be inserted into the selection region, or the identification of the collection may be expanded and displayed as the identifications of the plurality of pieces of multimedia content in the collection.

A return control of the detail page of the collection may also be displayed, and the detail page of the collection is returned to in response to a trigger on the return control.

In the method in the above embodiments, the hiding and displaying of the selection region and/or the display region of recommended users are implemented, which may ensure the immersive viewing experience of the current user and improve the efficiency of multimedia content switching and display.

The present disclosure further provides a display apparatus of multimedia content, which is described below with reference to Fig. 6.

Fig. 6 is a structural diagram of some embodiments of a display apparatus of multimedia content of the present disclosure. As shown in Fig. 6, the apparatus 60 in these embodiments includes: a first display module 610 and a second display module 620.

The first display module 610 is configured to play current multimedia content in a multimedia content stream in a playing interface, display a selection region of the multimedia content stream, and display identifications of multimedia content in the multimedia content stream in the selection region in response to a preset trigger operation, and the identifications of the multimedia content are arranged according to an order of the multimedia content in the multimedia content stream, and the multimedia content supports switching and playing according to the order in response to a swiping operation in a preset direction in the playing interface.

The second display module 620 is configured to play target multimedia content in response to a selection operation for an identification of the target multimedia content in the selection region, and the multimedia content in the multimedia content stream includes the target multimedia content.

In some embodiments, the first display module 610 is further configured to display one or more user identifications of one or more recommended users; and the second display module 620 is further configured to display a page of a target recommended user in response to a selection operation for a user identification of the target recommended user, wherein the one or more recommended users comprise the target recommended user.

In some embodiments, each of the one or more recommended users satisfies at least one of the following: a number of accesses by the current user to multimedia content published by the recommended user exceeds a first threshold; or the number of t accesses to multimedia content published by the recommended user exceeds a second threshold.

In some embodiments, the first display module 610 is further configured to display an entry of a multimedia content channel, and enter the multimedia content channel and display the playing interface in response to a trigger operation for the entrance of the multimedia content channel, wherein the selection region is in a hidden state.

In some embodiments, the first display module 610 is further configured to, display only a first region and display a control of the selection region in the first region, in response to the selection region being in the hidden state; and play the current multimedia content in the multimedia content stream in the playing interface, simultaneously display the first region and a second region, and display the selection region in the second region, in response to the trigger operation for the control of the selection region, and the preset trigger operation includes the trigger operation for the control of the selection region.

In some embodiments, the preset trigger operation comprises a trigger operation for an entry of a multimedia content channel or an update operation for the multimedia content channel, and the first display module 610 is configured to, display the playing interface in the multimedia content channel, play the current multimedia content in the multimedia content stream in the playing interface, and display the selection region of the multimedia content stream, in response to the trigger operation for the entry of the multimedia content channel or the update operation for the multimedia content channel.

In some embodiments, the first display module 610 is further configured to, hide the second region, and display only the first region, in response to the trigger operation for the control of the selection region, in a case where the first region and the second region are simultaneously displayed.

In some embodiments, the first display module 610 is further configured to hide the selection region in response to the selection region being displayed for a preset duration, or in response to a preset operation for the playing interface.

In some embodiments, the second display module 620 is further configured to play the target multimedia content and hide the selection region; or play the target multimedia content, switch the identification of the target multimedia content in the selection region from a first display effect to a second display effect, and switch the identification of the current multimedia content from the second display effect to the first display effect, and identifications of multimedia content other than the target multimedia content and the current multimedia content in the selection region are displayed with the first display effect.

In some embodiments, the first display module 610 is further configured to, for played multimedia content in the multimedia content stream, display a playing progress of the played multimedia content at an identification of the played multimedia content in the selection region correspondingly; or for each piece of multimedia content in the multimedia content stream, display a playing progress of the multimedia content at an identification of the multimedia content in the selection region correspondingly.

In some embodiments, the multimedia content in the multimedia content stream comprises a collection, the collection is a collection of a plurality of pieces of multimedia content of a same theme, an identification of the collection comprises the theme of the collection, and in a case where the target multimedia content is the collection, the second display module 620 is further configured to play the plurality of pieces of multimedia content in the collection according to an order of the plurality of pieces of multimedia content in the collection in response to a selection operation for the identification of the collection in the selection region; or display a detail interface of the collection in response to the selection operation for the identification of the collection in the selection region, wherein the detail interface of the collection comprises identifications of the plurality of pieces of multimedia content in the collection, and in response to a selection operation for an identification of any piece of multimedia content in the collection, multimedia content corresponding to the selected identification is played.

In some embodiments, the first display module 610 is further configured to display identifications of multimedia content after the some multimedia content in the selection region according to the order of the multimedia content in the multimedia content stream in response to a first switching operation of a current user for the identifications of the some multimedia content in the selection region; or display identifications of multimedia content before the some multimedia content in the selection region according to the order of the multimedia content in the multimedia content stream in response to a second switching operation of the current user for the identifications of the some multimedia content in the selection region.

It should be noted that the above units (modules) are only logical modules divided according to the specific functions implemented by them, and are not used to limit the specific implementation manners, for example, they may be implemented in software, hardware, or a combination of software and hardware. In an actual implementation, the above units may be implemented as independent physical entities, or may be implemented by a single entity (for example, a processor (CPU or DSP, etc.), an integrated circuit, etc.). In addition, the above units are indicated by dotted lines in the drawings to indicate that these units may not actually exist, and the operations/functions implemented by them may be implemented by the processing circuit itself.

In addition, although not shown, the apparatus may further include a memory, which may store various information generated in operations by the apparatus and the units included in the apparatus, programs and data for the operations, data to be sent by the communication unit, and the like. The memory may be a volatile memory and/or a non-volatile memory. For example, the memory may include but be not limited to a random access memory (RAM), a dynamic random access memory (DRAM), a static random access memory (SRAM), a read-only memory (ROM), or a flash memory. Certainly, the memory may also be located outside the apparatus. Optionally, although not shown, the apparatus may further include a communication unit, which may be configured to communicate with other apparatuses. In an example, the communication unit may be implemented in any appropriate manner known in the art, for example, include communication components such as an antenna array and/or a radio frequency link, various types of interfaces, communication units, and the like, which will not be described in detail here. In addition, the apparatus may further include other components not shown, such as a radio frequency link, a baseband processing unit, a network interface, a processor, and a controller, which will not be described in detail here.

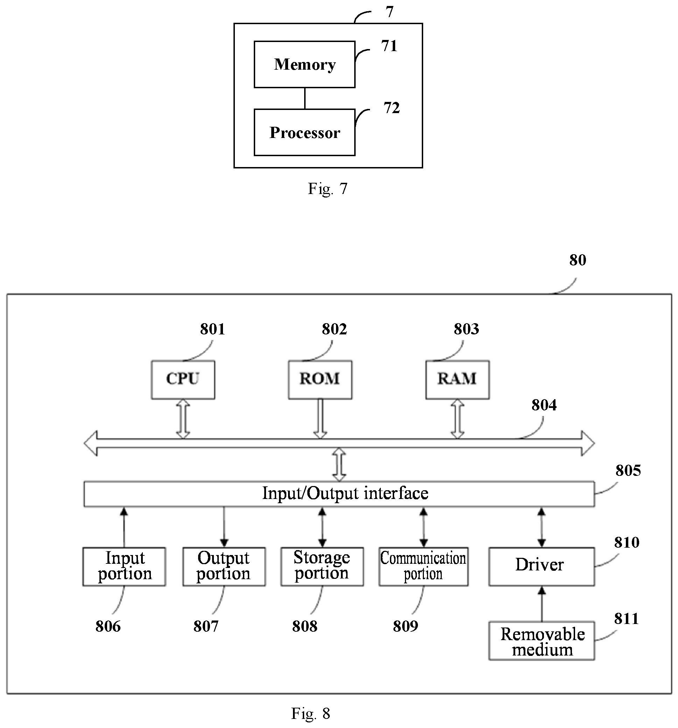

Some embodiments of the present disclosure further provide an electronic device. Fig. 7 is a block diagram of some embodiments of an electronic device of the present disclosure. For example, in some embodiments, the electronic device 7 may be various types of devices, and for example, the electronic device may include but be not limited to mobile terminals such as a mobile phone, a notebook computer, a digital broadcasting receiver, a personal digital assistant (PDA), a tablet computer, a portable multimedia player (PMP), and an in-vehicle terminal (such as an in-vehicle navigation terminal), and fixed terminals such as a digital TV and a desktop computer. For example, the electronic device 7 may include a display panel for displaying data and/or execution results used in the solution according to the present disclosure. For example, the display panel may be in various shapes, such as a rectangular panel, an elliptical panel, or a polygonal panel. In addition, the display panel may be not only a flat panel, but also a curved panel or even a spherical panel.

As shown in Fig. 7, the electronic device 7 in these embodiments includes: a memory 71 and a processor 72 coupled to the memory 71. It should be noted that the components of the electronic device 7 shown in Fig. 7 are merely exemplary and non-restrictive, and the electronic device 7 may further have other components according to actual application requirements. The processor 72 may control the other components in the electronic device 7 to perform desired functions.

In some embodiments, the memory 71 is configured to store one or more computer-readable instructions. The processor 72 is configured to, when running the computer-readable instructions, implement the method according to any one of the above embodiments when the computer-readable instructions are run by the processor 72. For the specific implementation and related explanation content of each step of the method, reference may be made to the above embodiments, and repeated parts are not described herein again.

For example, the processor 72 and the memory 71 may directly or indirectly communicate with each other. For example, the processor 72 and the memory 71 may communicate through a network. The network may include a wireless network, a wired network, and/or any combination of a wireless network and a wired network. The processor 72 and the memory 71 may also communicate with each other through a system bus, which is not limited in the present disclosure.

For example, the processor 72 may be embodied as various appropriate processors, processing apparatuses, etc., such as a central processing unit (CPU), a graphics processing unit (GPU), or a network processor (NP); and may also be a digital signal processor (DSP), an application specific integrated circuit (ASIC), a field programmable gate array (FPGA) or other programmable logic devices, a discrete gate or transistor logic device, or a discrete hardware component. The central processing unit (CPU) may have an X86 or ARM architecture or the like. For example, the memory 71 may include any combination of various forms of computer-readable storage media, such as a volatile memory and/or a non-volatile memory. For example, the memory 71 may include a system memory, and the system memory stores an operating system, an application, a boot loader, a database, other programs, and the like. Various applications, various data, and the like may also be stored in the storage medium.

In addition, according to some embodiments of the present disclosure, in the case where various operations/processes according to the present disclosure are implemented by software and/or firmware, a program that constitutes the software may be installed from a storage medium or a network into a computer system having a dedicated hardware structure, such as the computer system (or electronic device) 800 shown in Fig. 8. When the computer system is installed with various programs, the computer system may perform various functions, including the functions described above.

In Fig. 8, a central processing unit (CPU) 801 executes various processes according to a program stored in a read-only memory (ROM) 802 or a program loaded from a storage unit 808 into a random access memory (RAM) 803. The RAM 803 also stores data required when the CPU 801 executes various processes and the like as needed. The central processing unit is merely exemplary, and it may be other types of processors, such as the various processors described above. The ROM 802, the RAM 803, and the storage unit 808 may be various forms of computer-readable storage media, as described below. It should be noted that although the ROM 802, the RAM 803, and the storage unit 808 are shown separately in Fig. 8, one or more of them may be combined or located in the same or different memories or storage modules.

The CPU 801, the ROM 802, and the RAM 803 are connected to each other via a bus 804. An input/output interface 805 is also connected to the bus 804.

The following components are connected to the input/output interface 805: an input unit 806, such as a touch screen, a touchpad, a keyboard, a mouse, an image sensor, a microphone, an accelerometer, or a gyroscope; an output unit 807, including a display, such as a cathode ray tube (CRT) or a liquid crystal display (LCD), a speaker, a vibrator, or the like; a storage unit 808, including a hard disk, a magnetic tape, or the like; and a communication unit 809, including a network interface card, such as a LAN card or a modem. The communication unit 809 allows communication processing to be performed via a network, such as the Internet. It is easy to understand that although it is shown in Fig. 8 that various apparatuses or modules in the computer system 800 communicate through the bus 804, they may also communicate through a network or other means, where the network may include a wireless network, a wired network, and/or any combination of a wireless network and a wired network.

A driver 810 is also connected to the input/output interface 805 as needed. A removable medium 811, such as a magnetic disk, an optical disc, a magneto-optical disc, or a semiconductor memory, is installed on the driver 810 as needed, so that a computer program read therefrom is installed into the storage unit 808 as needed.

In the case where the above series of processes are implemented by software, a program that constitutes the software may be installed from a network, such as the Internet, or a storage medium, such as the removable medium 811.

According to the embodiments of the present disclosure, the process described above with reference to the flowchart may be implemented as a computer software program. For example, the embodiments of the present disclosure include a computer program product, which includes a computer program carried on a computer-readable medium, where the computer program contains program code for performing the method shown in the flowchart. In such an embodiment, the computer program may be downloaded and installed from a network through the communication unit 809, or installed from the storage unit 808, or installed from the ROM 802. When the computer program is executed by the CPU 801, the functions defined in the method of the embodiments of the present disclosure are executed.

It should be noted that in the context of the present disclosure, a computer-readable medium may be a tangible medium that may contain or store a program for use by or in combination with an instruction execution system, apparatus, or device. The computer-readable medium may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, or device, or any combination thereof. More specific examples of the computer-readable storage medium may include, but are not limited to: an electrically connected portable computer magnetic disk having one or more wires, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, a computer-readable storage medium may be any tangible medium that contains or stores a program, and the program may be used by or in combination with an instruction execution system, apparatus, or device. In the present disclosure, a computer-readable signal medium may include a data signal propagated on a baseband or as a part of a carrier, and computer-readable program code is carried in the data signal. This propagated data signal may be in multiple forms, and includes but is not limited to an electromagnetic signal, an optical signal, or any suitable combination thereof. The computer-readable signal medium may also be any computer-readable medium other than the computer-readable storage medium, and the computer-readable signal medium may send, propagate, or transmit a program for use by or in combination with an instruction execution system, apparatus, or device. The program code contained on the computer-readable medium may be transmitted in any suitable medium, including but not limited to: a wire, an optical cable, a radio frequency (RF), or any suitable combination thereof.

The above computer-readable medium may be included in the above electronic device, or may exist alone without being assembled into the electronic device.

In some embodiments, a computer program is further provided, including: instructions that, when executed by a processor, cause the processor to perform the method of any one of the above embodiments. For example, the instructions may be embodied as computer program code.

In the embodiments of the present disclosure, the computer program code for performing the operations of the present disclosure may be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be executed entirely on a user computer, partly executed on a user computer, executed as an independent software package, partly executed on a user computer and partly executed on a remote computer, or entirely executed on a remote computer or server. In the case of involving a remote computer, the remote computer may be connected to the user computer through any kind of network, including a local area network (LAN) or a wide area network (WAN), or it may be connected to an external computer (for example, connected by using Internet provided by an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules, components, or units involved in the embodiments of the present disclosure may be implemented by software or by hardware. The name of a module, component, or unit does not constitute a limitation on the module, component, or unit itself under certain circumstances.

The functions described above herein may be at least partially performed by one or more hardware logic components. For example, without limitation, exemplary hardware logic components that may be used include: a field programmable gate array (FPGA), an application specific integrated circuit (ASIC), an application specific standard product (ASSP), a system on chip (SOC), a complex programmable logical device (CPLD), and the like.

According to some embodiments of the present disclosure, a display method of multimedia content is provided, including: playing current multimedia content in a multimedia content stream in a playing interface, displaying a selection region of the multimedia content stream, and displaying identifications of multimedia content in the multimedia content stream in the selection region in response to a preset trigger operation, wherein the identifications of the multimedia content are arranged according to an order of the multimedia content in the multimedia content stream, and the multimedia content supports switching and playing according to the order in response to a swiping operation in a preset direction in the playing interface; and playing target multimedia content in response to a selection operation for an identification of the target multimedia content in the selection region, wherein the multimedia content in the multimedia content stream comprises the target multimedia content.

In some embodiments, the display method further includes: displaying one or more user identifications of one or more recommended users; and displaying a page of a target recommended user in response to a selection operation for a user identification of the target recommended user, wherein the one or more recommended users comprise the target recommended user.

In some embodiments, the display method further includes: displaying an entry of a multimedia content channel; and entering the multimedia content channel and displaying the playing interface in response to a trigger operation for the entrance of the multimedia content channel, wherein the selection region is in a hidden state.

In some embodiments, the display method further includes: displaying only a first region and displaying a control of the selection region in the first region, in response to the selection region being in the hidden state, and the preset trigger operation comprises a trigger operation for the control of the selection region, and playing the current multimedia content in the multimedia content stream in the playing interface and displaying the selection region of the multimedia content stream in response to the preset trigger operation includes: playing the current multimedia content in the multimedia content stream in the playing interface, simultaneously displaying the first region and a second region, and displaying the selection region in the second region, in response to the trigger operation for the control of the selection region.

In some embodiments, the preset trigger operation comprises a trigger operation for an entry of a multimedia content channel or an update operation for the multimedia content channel, and playing the current multimedia content in the multimedia content stream in the playing interface and displaying the selection region of the multimedia content stream, in response to the preset trigger operation includes: displaying the playing interface in the multimedia content channel, playing the current multimedia content in the multimedia content stream in the playing interface, and displaying the selection region of the multimedia content stream, in response to the trigger operation for the entry of the multimedia content channel or the update operation for the multimedia content channel.

In some embodiments, the display method further includes: displaying prompt information at the control of the selection region before the control of the selection region is triggered for a first time.

In some embodiments, the display method further includes: hiding the second region, and displaying only the first region, in response to the trigger operation for the control of the selection region in a case where the first region and the second region are simultaneously displayed.

In some embodiments, the display method further includes: hiding the selection region in response to the selection region being displayed for a preset duration, or in response to a preset operation for the playing interface.

In some embodiments, playing the target multimedia content includes: playing the target multimedia content and hiding the selection region; or playing the target multimedia content, switching an identification of the target multimedia content in the selection region from a first display effect to a second display effect, and switching an identification of the current multimedia content from the second display effect to the first display effect, wherein identifications of multimedia content other than the target multimedia content and the current multimedia content in the selection region are displayed with the first display effect.

In some embodiments, the display method further includes: for played multimedia content in the multimedia content stream, displaying a playing progress of the played multimedia content at an identification of the played multimedia content in the selection region correspondingly; or for each piece of multimedia content in the multimedia content stream, displaying a playing progress of the multimedia content at an identification of the multimedia content in the selection region correspondingly.

In some embodiments, the multimedia content in the multimedia content stream comprises a collection, the collection is a collection of a plurality of pieces of multimedia content of a same theme, an identification of the collection comprises the theme of the collection, and in a case where the target multimedia content is the collection, playing the target multimedia content in response to the selection operation for the identification of the target multimedia content in the selection region includes: playing the plurality of pieces of multimedia content in the collection according to an order of the plurality of pieces of multimedia content in the collection in response to a selection operation for the identification of the collection in the selection region; or displaying a detail interface of the collection in response to the selection operation for the identification of the collection in the selection region, wherein the detail interface of the collection comprises identifications of the plurality of pieces of multimedia content in the collection, and in response to a selection operation for an identification of any piece of multimedia content in the collection, multimedia content corresponding to the selected identification is played.

In some embodiments, the selection region comprises identifications of some multimedia content in the multimedia content stream, and the display method further includes: displaying identifications of multimedia content after the some multimedia content in the selection region according to the order of the multimedia content in the multimedia content stream in response to a first switching operation of a current user for the identifications of the some multimedia content in the selection region; and/or displaying identifications of multimedia content before the some multimedia content in the selection region according to the order of the multimedia content in the multimedia content stream in response to a second switching operation of the current user for the identifications of the some multimedia content in the selection region.

According to other embodiments of the present disclosure, a display apparatus of multimedia content is provided, including: a first display module configured to play current multimedia content in a multimedia content stream in a playing interface, display a selection region of the multimedia content stream, and display identifications of multimedia content in the multimedia content stream in the selection region in response to a preset trigger operation, wherein the identifications of the multimedia content are arranged according to an order of the multimedia content in the multimedia content stream, and the multimedia content supports switching and playing according to the order in response to a sliding operation in a preset direction in the playing interface; and a second display module configured to play target multimedia content in response to a selection operation for an identification of the target multimedia content in the selection region, wherein the multimedia content in the multimedia content stream comprises the target multimedia content.

According to yet other embodiments of the present disclosure, an electronic device is provided, including: a memory; and a processor coupled to the memory, and the processor is configured to execute the display method of multimedia content according to any one of the embodiments in the present disclosure based on instructions stored in the memory.

According to still other embodiments of the present disclosure, a computer-readable storage medium is provided, a computer program is stored on the computer-readable storage medium, and the display method of multimedia content according to any one of the embodiments in the present disclosure is implemented when the program is executed by a processor.

According to yet other embodiments of the present disclosure, a computer program is provided, including: instructions that, when executed by a processor, cause the processor to perform the display method of multimedia content according to any one of the embodiments in the present disclosure.

According to some embodiments of the present disclosure, a computer program product is provided, including instructions that, when executed by a processor, implement the display method of multimedia content according to any one of the embodiments in the present disclosure.

The above description only shows some embodiments of the present disclosure and illustrates the technical principles employed. Those skilled in the art should understand that the scope of disclosure involved in the present disclosure is not limited to the technical solutions formed by the specific combination of the above technical features, and should also cover, without departing from the above disclosed concept, other technical solutions formed by any combination of the above technical features or their equivalent features. For example, a technical solution formed by replacing the above features with technical features with similar functions disclosed in the present disclosure (but not limited thereto) also falls within the scope of the present disclosure.

In the description provided herein, many specific details are set forth. However, it should be understood that the embodiments of the present disclosure may be implemented without these specific details. In other cases, well-known methods, structures, and technologies are not shown in detail to avoid obscuring the understanding of the description.

In addition, although the operations are depicted in a specific order, it should not be understood as requiring these operations to be performed in the specific order shown or in a sequential order. Under certain circumstances, multitasking and parallel processing may be advantageous. Similarly, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although some specific embodiments of the present disclosure have been described in detail by way of examples, those skilled in the art should understand that the above examples are only for illustration, and are not intended to limit the scope of the present disclosure. Those skilled in the art should understand that the above embodiments may be modified without departing from the scope and spirit of the present disclosure. The scope of the present disclosure is defined by the appended claims.

## Claims

1. A display method of multimedia content, comprising:
playing current multimedia content in a multimedia content stream in a playing interface, displaying a selection region of the multimedia content stream, and displaying identifications of multimedia content in the multimedia content stream in the selection region in response to a preset trigger operation, wherein the identifications of the multimedia content are arranged according to an order of the multimedia content in the multimedia content stream, and the multimedia content supports switching and playing according to the order in response to a swiping operation in a preset direction in the playing interface; and
playing target multimedia content in response to a selection operation for an identification of the target multimedia content in the selection region, wherein the multimedia content in the multimedia content stream comprises the target multimedia content.

2. The display method of claim 1, further comprising:
displaying one or more user identifications of one or more recommended users; and
displaying a page of a target recommended user in response to a selection operation for a user identification of the target recommended user, wherein the one or more recommended users comprise the target recommended user.

3. The display method of claim 1, further comprising:
displaying an entry of a multimedia content channel; and
entering the multimedia content channel and displaying the playing interface in response to a trigger operation for the entrance of the multimedia content channel, wherein the selection region is in a hidden state.

4. The display method of claim 3, further comprising:
displaying only a first region and displaying a control of the selection region in the first region, in response to the selection region being in the hidden state,
wherein the preset trigger operation comprises a trigger operation for the control of the selection region, and playing the current multimedia content in the multimedia content stream in the playing interface and displaying the selection region of the multimedia content stream in response to the preset trigger operation comprises:
playing the current multimedia content in the multimedia content stream in the playing interface, simultaneously displaying the first region and a second region, and displaying the selection region in the second region, in response to the trigger operation for the control of the selection region.

5. The display method of any of claims 1 to 4, wherein the preset trigger operation comprises a trigger operation for an entry of a multimedia content channel or an update operation for the multimedia content channel, and playing the current multimedia content in the multimedia content stream in the playing interface and displaying the selection region of the multimedia content stream, in response to the preset trigger operation comprises:
, displaying the playing interface in the multimedia content channel, playing the current multimedia content in the multimedia content stream in the playing interface, and displaying the selection region of the multimedia content stream, in response to the trigger operation for the entry of the multimedia content channel or the update operation for the multimedia content channel.

6. The display method of claim 4, further comprising:
displaying prompt information at the control of the selection region before the control of the selection region is triggered for a first time.

7. The display method of claim 4 or 6, further comprising:
hiding the second region, and displaying only the first region, in response to the trigger operation for the control of the selection region in a case where the first region and the second region are simultaneously displayed;
.

8. The display method of any of claims 1 to 7, further comprising:
hiding the selection region in response to the selection region being displayed for a preset duration, or in response to a preset operation for the playing interface.

9. The display method of any of claims 1 to 8, wherein the playing the target multimedia content comprises:
playing the target multimedia content and hiding the selection region; or
playing the target multimedia content, switching an identification of the target multimedia content in the selection region from a first display effect to a second display effect, and switching an identification of the current multimedia content from the second display effect to the first display effect, wherein identifications of multimedia content other than the target multimedia content and the current multimedia content in the selection region are displayed with the first display effect.

10. The display method of any of claims 1 to 9, further comprising:
for played multimedia content in the multimedia content stream, displaying a playing progress of the played multimedia content at an identification of the played multimedia content in the selection region correspondingly; or
for each piece of multimedia content in the multimedia content stream, displaying a playing progress of the multimedia content at an identification of the multimedia content in the selection region correspondingly.

11. The display method of any of claims 1 to 10, wherein the multimedia content in the multimedia content stream comprises a collection, the collection is a collection of a plurality of pieces of multimedia content of a same theme, an identification of the collection comprises the theme of the collection, and in a case where the target multimedia content is the collection, playing the target multimedia content in response to the selection operation for the identification of the target multimedia content in the selection region comprises:
playing the plurality of pieces of multimedia content in the collection according to an order of the plurality of pieces of multimedia content in the collection in response to a selection operation for the identification of the collection in the selection region; or
displaying a detail interface of the collection in response to the selection operation for the identification of the collection in the selection region, wherein the detail interface of the collection comprises identifications of the plurality of pieces of multimedia content in the collection, and in response to a selection operation for an identification of any piece of multimedia content in the collection, multimedia content corresponding to the selected identification is played.

12. The display method of any of claims 1 to 11, wherein the selection region comprises identifications of some multimedia content in the multimedia content stream, and the display method further comprises:
displaying identifications of multimedia content after the some multimedia content in the selection region according to the order of the multimedia content in the multimedia content stream in response to a first switching operation of a current user for the identifications of the some multimedia content in the selection region; and/or
displaying identifications of multimedia content before the some multimedia content in the selection region according to the order of the multimedia content in the multimedia content stream in response to a second switching operation of the current user for the identifications of the some multimedia content in the selection region.

13. A display apparatus of multimedia content, comprising:
a first display module configured to play current multimedia content in a multimedia content stream in a playing interface, display a selection region of the multimedia content stream, and display identifications of multimedia content in the multimedia content stream in the selection region in response to a preset trigger operation, wherein the identifications of the multimedia content are arranged according to an order of the multimedia content in the multimedia content stream, and the multimedia content supports switching and playing according to the order in response to a sliding operation in a preset direction in the playing interface; and
a second display module configured to play target multimedia content in response to a selection operation for an identification of the target multimedia content in the selection region, wherein the multimedia content in the multimedia content stream comprises the target multimedia content.

14. An electronic device, comprising:
one or more processors; and
one or more memories coupled to the one or more processors and configured for storing instructions which, when executed by the one or more processors, cause the one or more processors to execute the display method of multimedia content of any of claims 1 to 12.

15. A computer-readable storage medium, having stored thereon a computer program which, when executed by a processor, causes the processor to implement the display method of multimedia content of any of claims 1 to 12.

16. A computer program product, comprising: instructions, which when executed by a processor, causes the processor to implement the display method of multimedia content of any of claims 1 to 12.

17. A computer program, comprising: instructions, ,which when executed by a processor, causes the processor to implement the display method of multimedia content of any of claims 1 to 12.
